# EUROPEAN PATENT APPLICATION

(11) **EP 4 813 487 A1**
(43) Date of publication of application: **30.09.2026**
(21) Application number: 26167873.4
(22) Date of filing: 26.03.2026
(51) Int. Cl.: A63F 13/86, A63F 13/87, A63F 13/213, A63F 13/48, A63F 13/655

(54) **INFORMATION PROCESSING APPARATUS, METHOD, AND PROGRAM**

(30) Priority: 26.03.2025 JP 2025051648
(71) Applicant: Nintendo Co., Ltd., Kyoto-shi, Kyoto 601-8501 (JP)
(72) Inventor: OIWA, Ryota, Kyoto-shi, Kyoto 601-8501 (JP); KOBAYASHI, Masayoshi, Kyoto-shi, Kyoto 601-8501 (JP)
(74) Representative: Lorenz Seidler Gossel Part. mbB

(57) **Abstract**

An information processing apparatus (100) comprises one or more processors (102) and one or more memories (108). The apparatus executes a chat application (114) generating a first display image comprising a game application image generated by a first game application and at least one distribution camera image distributed in a participating session. The apparatus causes the first game application to obtain the at least one distribution camera image based on a first request issued by the first game application during execution of the chat application. Furthermore, the apparatus causes the chat application to generate a second display image comprising the game application image generated by the first game application and not comprising the at least one distribution camera image.

## Description

The present disclosure relates to an information processing apparatus, a method, and a program.

### INTRODUCTION

Online communication using camera images is known.

### SUMMARY

(Configuration 1) An exemplary embodiment provides an information processing apparatus configured to execute a chat application that causes a display device to display a first display image comprising a game application image output by a first game application being executed and at least one distribution camera image distributed in a participating session, the information processing apparatus comprising: one or more processors ; and one or more memories storing instructions that, when executed by the one or more processors, cause the information processing apparatus to perform operations comprising: during execution of the chat application, causing a first game application being executed to obtain the at least one distribution camera image based on a first request by the first game application ; and causing the display device to display a second display image comprising the game application image output by the first game application but not comprising the at least one distribution camera image.

(Configuration 2) In Configuration 1, the game application image output by the first game application is output using the at least one distribution camera image obtained by the first game application.

(Configuration 3) In Configuration 1 or 2, the first request comprises a second request and a third request ; the obtaining of the at least one distribution camera image is performed based on the second request ; and the displaying of the second display image is performed based on the third request while the first game application is caused to obtain the distribution camera image.

(Configuration 4) In Configuration 1 or 2, the game application image in the second display image is larger than the game application image in the first display image.

(Configuration 5) In Configuration 4, the game application image in the second display image is displayed in full-screen on the display device.

(Configuration 6) In Configuration 1 or 2, the operations further comprise: causing the display device to temporarily display a third display image comprising the game application image and the at least one distribution camera image comprised in the first display image instead of the second display image, when a specified condition is satisfied during display of the second display image.

(Configuration 7) In Configuration 6, the third display image is an image in which at least one of the distribution camera images comprised in the first display image is superimposed on the second display image.

(Configuration 8) In Configuration 1 or 2, the first display image comprises a session image indicating information on the session and being different from the distribution camera image ; and the second display image does not comprise the session image.

(Configuration 9) In Configuration 8, the session image indicates information associated with each of information processing apparatuses not distributing a distribution camera image in the session.

(Configuration 10) In Configuration 1 or 2, the operations further comprise: causing the display device to display the first display image instead of the second display image based on a fourth request from the first game application while the second display image is displayed.

(Configuration 11) In Configuration 1 or 2, the operations further comprise: causing the display device to display a fourth display image comprising the at least one distribution camera image instead of the second display image based on an end of the first game application while the second display image is displayed.

(Configuration 12) In Configuration 11, the fourth display image and the first display image comprise the distribution camera image at the same position in each display image.

(Configuration 13) An exemplary embodiment provides a method used for an information processing apparatus capable of executing a chat application that causes a display device to display a first display image comprising a game application image output by a first game application being executed and at least one distribution camera image distributed in a participating session , the method comprising: during execution of the chat application, causing the first game application being executed to obtain the at least one distribution camera image based on a first request by the first game application ; and during execution of the chat application, causing the display device to display a second display image comprising the game application image output by the first game application but not comprising the at least one distribution camera image.

(Configuration 14) An exemplary embodiment provides a program causing one or more processors to perform the method of Configuration 13.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

FIG. 1 shows an exemplary illustrative non-limiting schematic diagram showing a configuration example of an information processing system according to the present embodiment.
FIG. 2 shows an exemplary illustrative non-limiting schematic diagram showing a hardware configuration example of an information processing apparatus according to the present embodiment.
FIG. 3 shows an exemplary illustrative non-limiting schematic diagram showing a hardware configuration example of a management server according to the present embodiment.
FIG. 4 shows an exemplary illustrative non-limiting schematic diagram showing a software configuration example of the information processing apparatus according to the present embodiment.
FIG. 5 shows an exemplary illustrative non-limiting schematic diagram showing an example of group information of the information processing apparatus according to the present embodiment.
FIG. 6 shows an exemplary illustrative non-limiting diagram showing an example of a display image before starting a communication game.
FIG. 7 shows an exemplary illustrative non-limiting first sequence diagram showing a processing example of a game application according to the present embodiment.
FIG. 8 shows an exemplary illustrative non-limiting schematic diagram showing an example of a display image generated in sequence SQ108.
FIG. 9 shows an exemplary illustrative non-limiting schematic diagram showing an example of a display image generated in sequence SQ111.
FIG. 10 shows an exemplary illustrative non-limiting schematic diagram showing an example of a display image generated in sequence SQ111.
FIG. 11 shows an exemplary illustrative non-limiting second sequence diagram showing a processing example of a game application according to the present embodiment.
FIG. 12 shows an exemplary illustrative non-limiting schematic diagram showing an example of a display image generated in sequence SQ122.

### DETAILED DESCRIPTION OF NON-LIMITING EXAMPLE EMBODIMENTS

The present embodiment will be described in detail with reference to the drawings. The same or corresponding elements in the drawings have the same reference characters allotted and description thereof will not be repeated.

### [A. System Configuration Example]

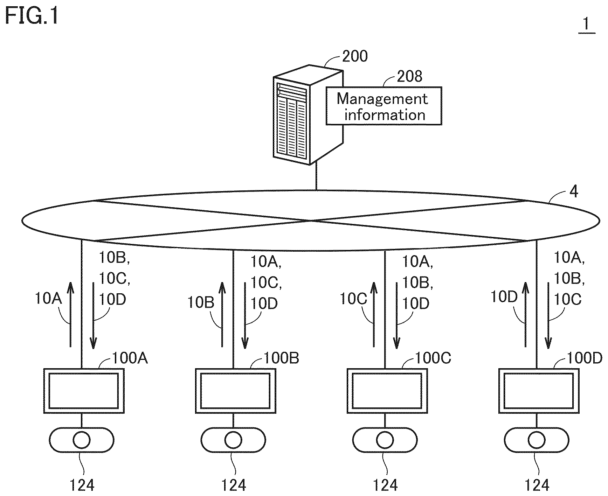

First, a configuration example of a system according to the present embodiment will be described. FIG. 1 is a schematic diagram showing a configuration example of an information processing system 1 according to the present embodiment. The information processing system 1 includes one or a plurality of information processing apparatuses 100. The information processing apparatus 100 is, for example, a game apparatus for providing a game to a user. The information processing apparatus may be an apparatus dedicated to games, or may be an apparatus capable of executing things other than games. The information processing apparatus may be, for example, a personal computer, a tablet terminal, a smartphone, a wearable terminal, a server, etc. FIG. 1 shows a configuration example of the information processing system 1 in a case of including five information processing apparatuses 100 connected to a network 4. In the following description, when it is necessary to identify each of the plurality of information processing apparatuses 100, the information processing apparatuses 100 are distinguished by appending an alphabet. FIG. 1 shows information processing apparatuses 100A, 100B, 100C, and 100D.

In the present embodiment, a user using the information processing apparatus 100 has his/her own account, and his/her own account is associated with each information processing apparatus 100. One account may be associated with a plurality of information processing apparatuses 100, or a plurality of accounts may be associated with one information processing apparatus 100. A user having an account can cause the associated account to participate in one or a plurality of communication groups by performing a specified input to the information processing apparatus 100. Hereinafter, the communication group may be abbreviated as "group." In the present embodiment, a state of participating in a group indicates a state in which communication is possible with users of other accounts participating in the group.

In the present embodiment, a group is formed by a plurality of accounts, and it is possible to perform communication within the group. The information processing apparatus 100 corresponding to an account participating in any group transmits data used for communication between users to other information processing apparatuses 100 corresponding to other accounts participating in the group. Hereinafter, data used for communication between users may be referred to as "communication data 10." In this way, between the information processing apparatuses 100 used by each user participating in any group, various information can be exchanged with each other.

For example, the communication data 10 may include image data acquired by the information processing apparatus 100, information regarding a game played in the information processing apparatus 100, voice data acquired by the information processing apparatus 100, text data acquired by the information processing apparatus 100, etc. The image may be an image captured using a camera 124, etc. usable in the information processing apparatus 100, or may be an image of an application being executed in the information processing apparatus 100. "Image" in the present specification includes both an image itself and an image used for outputting an image. Also, "sound" in the present specification similarly includes data used for generating or outputting sound.

In order to transmit and receive the communication data 10, a session corresponding to the group may be established between the plurality of information processing apparatuses 100 corresponding to the accounts participating in the group. That is, the plurality of information processing apparatuses 100 corresponding to the accounts participating in the same group may have a common session. A management server 200 may manage the session. FIG. 1 shows, as an example, a case where information processing apparatuses 100A to 100D correspond respectively to five accounts participating in the same group. The information processing apparatus 100A transmits communication data 10A to one or a plurality of other information processing apparatuses 100, and receives communication data 10B to 10D transmitted by one or a plurality of other information processing apparatuses 100. The information processing apparatuses 100B to 100D transmit and receive communication data 10 similarly to the information processing apparatus 100A. Processing based on the communication data 10 will be described in detail later.

The information processing system 1 may include a management server 200. The management server 200 is in charge of processing for newly configuring a group, processing for one or a plurality of accounts to participate in a group, etc. The management server 200 may have management information 208 for managing configured groups and one or a plurality of accounts, etc. participating in each group. The information processing system 1 may further include a relay server not shown. The relay server can relay the communication data 10 transmitted and received by one or a plurality of information processing apparatuses 100. The management server 200 and the relay server may be implemented in a single physical server. The information processing system 1 may include a plurality of management servers 200, or may include a plurality of relay servers. Functions of the management server 200 and the relay server may not be separated. The management server 200 and the relay server may be virtual servers.

A method in which a certain information processing apparatus 100 transmits communication data 10 to one or a plurality of other information processing apparatuses 100 may be a method of directly transmitting communication data 10 to one or a plurality of other information processing apparatuses 100 in addition to or instead of a method via one or a plurality of relay entities such as a server. As an example of a method of directly transmitting communication data 10, for example, a P2P method can be mentioned.

A game application executable in the information processing apparatus 100 may be capable of executing a communication game in which a game progresses by communicating with other information processing apparatuses 100. In order to play a communication game, an account may be essential.

Here, an account for participating in a communication game may be the same as an account for participating in a group, or may be a different account. Hereinafter, in order to distinguish the account for participating in a communication game from the account for participating in a group, it is also referred to as a "game account." Furthermore, the account for participating in a group and the game account may follow systems different from each other.

Also, a set of game accounts of users playing a communication game together is also referred to as a "game group" for distinction from the communication group. Other accounts participating in a game group in which a certain account participates may also participate in a communication group in which the certain account participates, or may not participate.

### [B. Hardware Configuration Example]

Next, a hardware configuration example of each apparatus included in the information processing system 1 according to the present embodiment will be described.

### (b1: Information processing apparatus 100)

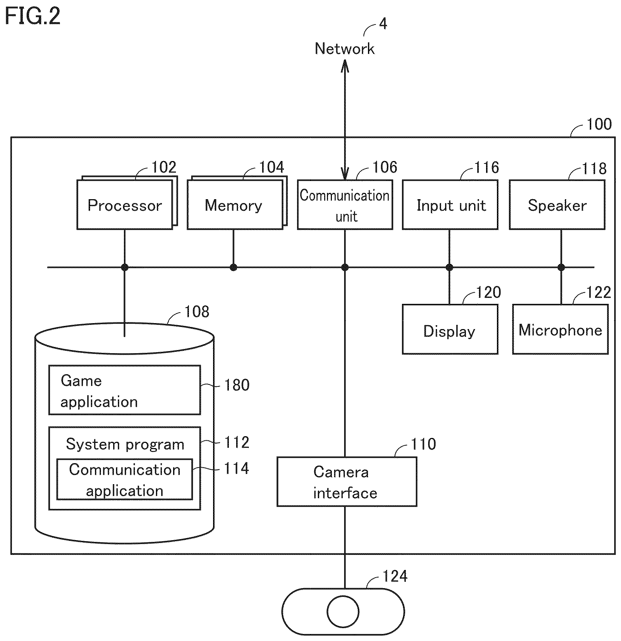

FIG. 2 is a schematic diagram showing a hardware configuration example of the information processing apparatus 100 according to the present embodiment. The information processing apparatus 100 is a kind of computer. In addition, in the present specification, "computer" does not necessarily mean one apparatus, and can refer to the whole in which a plurality of apparatuses are connected by wire or wirelessly.

Referring to FIG. 2, the information processing apparatus 100 includes, for example, one or a plurality of processors 102, one or a plurality of memories 104, a communication unit 106, a storage 108, a camera interface 110, an input unit 116, a speaker 118, a display 120, and a microphone 122. Each component may be removable from the main body of the information processing apparatus 100. The processor 102 is a processing entity for executing processing in the information processing apparatus 100. The processor 102 includes, for example, a CPU (Central Processing Unit), a GPU (Graphics Processing Unit), etc. The processor 102 expands a program stored in the storage 108 into the memory 104 and executes it.

The memory 104 is a volatile storage medium accessible by the processor 102, and includes, for example, a DRAM (Dynamic Random Access Memory), an SRAM (Static Random Access Memory), etc. The storage 108 is a non-volatile storage medium accessible by the processor 102, and includes, for example, a flash memory, a hard disk, etc. The storage 108 may include, for example, a storage medium detachable from the information processing apparatus 100 such as a cartridge or an optical disk. The storage 108 stores, for example, a system program 112 and a game application 180.

The system program 112 includes computer-readable instructions for hardware control of the information processing apparatus 100, providing a program execution environment, etc. The system program 112 includes a communication application 114. Although details will be described later, the communication application 114 executes processing regarding transmission and reception of the communication data 10 between a plurality of information processing apparatuses 100 corresponding to a plurality of accounts participating in a group. The game application 180 includes computer-readable instructions for executing a game. A plurality of game applications 180 may be installed in the information processing apparatus 100. Also, the game application 180 may be read from a separate storage medium.

In the present specification, the term "processor" encompasses at least a processing circuit that executes processing according to computer-readable instructions such as a CPU and a GPU, and a hard-wired circuit such as an ASIC (Application Specific Integrated Circuit) and an FPGA (Field Programmable Gate Array). In the present specification, the term "memory" may include at least a flash memory and a DRAM, and may further include other storage media such as the storage 108.

In the information processing apparatus 100, an SoC (System on Chip) in which functions of a processor, a memory, etc. are integrated may be adopted. In this case, the processor and the memory exist within the same SoC. Therefore, in the present specification, the terms "processor" and "memory" encompass a configuration independent from each other and a configuration integrated with each other. The communication unit 106 transmits and receives data to and from other information processing apparatuses 100, the management server 200, the relay server, etc. via the network 4. The communication unit 106 may perform data communication with other information processing apparatuses 100, etc. via the Internet as an example of the network 4. Also, the network 4 may be a wireless network according to Bluetooth (registered trademark), ZigBee (registered trademark), wireless LAN (IEEE 802.11 standard), etc.

The camera interface 110 mediates data transmission to the camera 124 and data reception from the camera 124. The camera interface 110 may be connected to the camera 124 by wire, or may be connected to the camera 124 wirelessly. The input unit 116 accepts user operations. The input unit 116 includes, for example, a keyboard, a mouse, a game controller, a touch panel, etc. The input unit 116 may be an interface with an apparatus that accepts user operations. That is, the apparatus that accepts user operations may exist outside the information processing apparatus 100.

The display 120 displays an image or video generated by processing by the processor 102. The display 120 includes, for example, an LCD (Liquid Crystal Display), an organic EL display, etc. In addition, the display 120 may exist outside the information processing apparatus 100. In this case, the information processing apparatus 100 may include an interface circuit with the display 120.

The microphone 122 is arranged in a housing, etc. of the information processing apparatus 100, and collects voice to generate a voice signal. The speaker 118 is arranged in a housing, etc. of the information processing apparatus 100, and generates voice from a voice signal. At least one of the microphone 122 and the speaker 118 may exist outside the information processing apparatus 100.

The camera 124 generates an image in which a subject is captured according to a command from the information processing apparatus 100 or according to a specified condition. The camera 124 includes, for example, an image sensor such as a CCD (Charge-Coupled Device) image sensor or a CMOS (Complementary Metal Oxide Semiconductor) image sensor. A lens may be arranged in a preceding stage of the image sensor. The camera 124 may be, for example, a camera for video calls. The camera 124 may be a dedicated camera connectable only to a specific device, or may be a general-purpose camera connectable to any device. A plurality of cameras 124 may be connectable to the information processing apparatus 100. In addition, the information processing apparatuses 100 respectively corresponding to a plurality of accounts participating in the same group may not have the same hardware configuration. For example, some information processing apparatuses 100 are game apparatuses, and other information processing apparatuses 100 may be personal computers, televisions, smartphones, tablets, etc. capable of executing games.

### (b2: Management server 200)

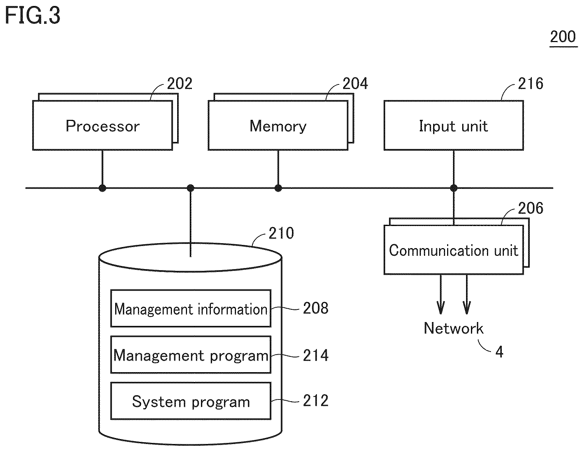

FIG. 3 is a schematic diagram showing a hardware configuration example of the management server 200 according to the present embodiment. Referring to FIG. 3, the management server 200 includes, for example, one or a plurality of processors 202, one or a plurality of memories 204, one or a plurality of communication units 206, a storage 210, and an input unit 216.

The processor 202 is a processing entity for executing processing in the management server 200. The processor 202 includes, for example, a CPU, a GPU, etc. The processor 202 expands a program stored in the storage 210 into the memory 204 and executes it. The memory 204 is a volatile storage medium accessible by the processor 202, and includes, for example, a DRAM, an SRAM, etc.

The storage 210 is a non-volatile storage medium accessible by the processor 202, and includes, for example, a hard disk, a flash memory, etc. The storage 210 stores, for example, a system program 212, a management program 214, etc. The system program 212 includes computer-readable instructions for hardware control of the management server 200, providing a program execution environment, etc. The management program 214 includes computer-readable instructions for executing processing related to management in charge of the management server 200.

The management information 208 may be stored in the storage 210 or the memory 204. The communication unit 206 transmits and receives data to and from the information processing apparatus 100, the management server 200, etc. via the network 4. The communication unit 206 may be connected to the network 4 by wire, or may be connected to the network 4 wirelessly. The input unit 216 accepts user operations. The input unit 216 includes, for example, a keyboard, a mouse, etc.

### [C. Software Configuration Example of Information Processing Apparatus 100]

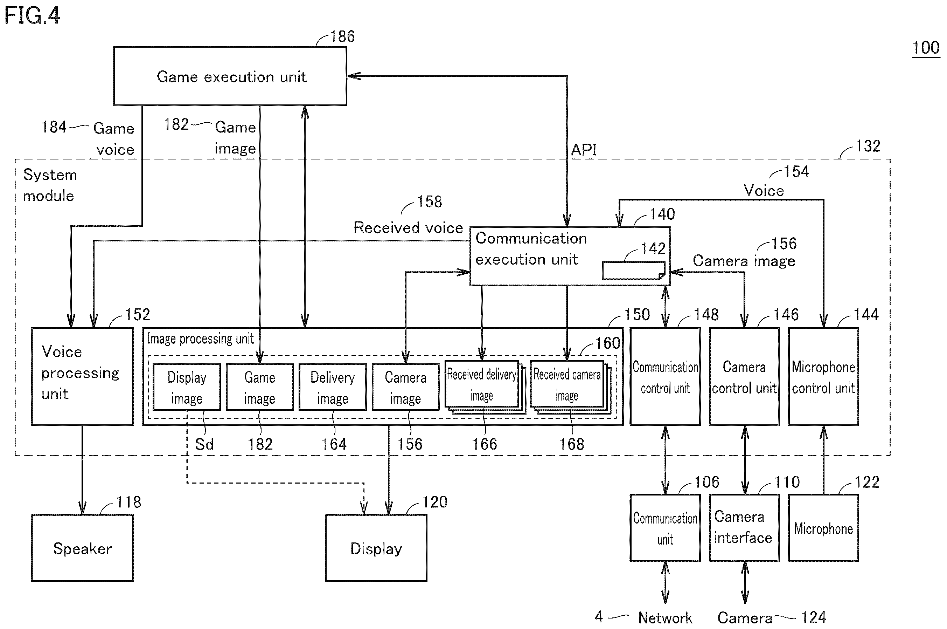

Next, a software configuration example of the information processing apparatus 100 according to the present embodiment will be described. FIG. 4 is a schematic diagram showing a software configuration example of the information processing apparatus 100 according to the present embodiment.

In the information processing apparatus 100, the system program 112 including the communication application 114 and the game application 180 are simultaneously executable. In addition, "simultaneously executable" means that a plurality of applications or programs are executed in parallel, and is not intended to limit execution timing, etc. The system program 112 being executed corresponds to a system module 132. The system module 132 provides basic functions necessary in the information processing apparatus 100. A game execution unit 186 corresponds to the game application 180 being executed. The system module 132 includes a communication execution unit 140. The communication execution unit 140 corresponds to the communication application 114 being executed.

The system module 132 includes a microphone control unit 144, a camera control unit 146, a communication control unit 148, an image processing unit 150, and a voice processing unit 152. The microphone control unit 144 generates voice 154 from a voice signal output by the microphone 122. The camera control unit 146 generates a camera image 156 from a video signal output by the camera 124. The camera control unit 146 may be able to control imaging start and imaging stop, etc. of the camera 124, and may be able to control imaging conditions of the camera 124. The imaging conditions of the camera 124 include, for example, a frame rate, a white balance, etc.

The communication control unit 148 gives commands to the communication unit 106 to control data communication with other information processing apparatuses 100, etc. The image processing unit 150 can use a storage area 160 for storing images. The storage area 160 may use at least a partial area of, for example, one or a plurality of memories 104 or storage 108. The image processing unit 150 may be capable of image processing for one or a plurality of images. The storage area 160 may include, for example, areas for storing a display image Sd, a game image 182, a delivery image 164, a camera image 156, one or a plurality of received delivery images 166, and one or a plurality of received camera images 168.

The communication execution unit 140 executes processing for exchanging communication data 10 with other information processing apparatuses 100. For example, the communication execution unit 140 may execute processing necessary for participating in a designated group according to user operations. The communication execution unit 140 may store group information 142. The communication execution unit 140 may update the group information 142 based on information from the management server 200, etc. periodically or every time a specified condition is satisfied. In addition, a storage destination of the group information 142 may be at least a partial area of, for example, one or a plurality of memories 104 or storage 108.

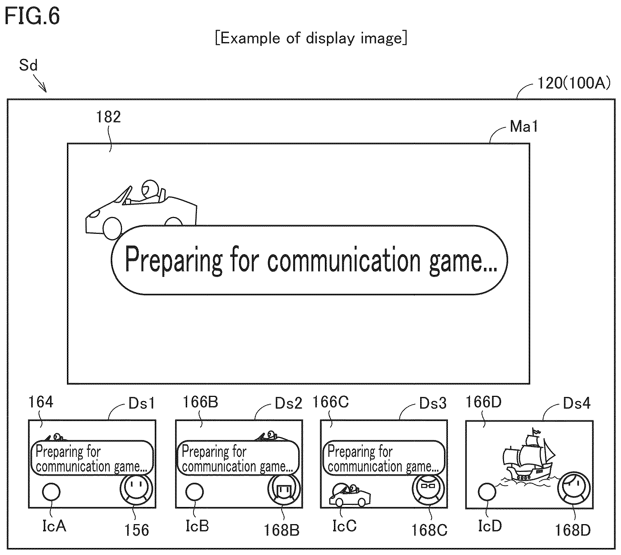

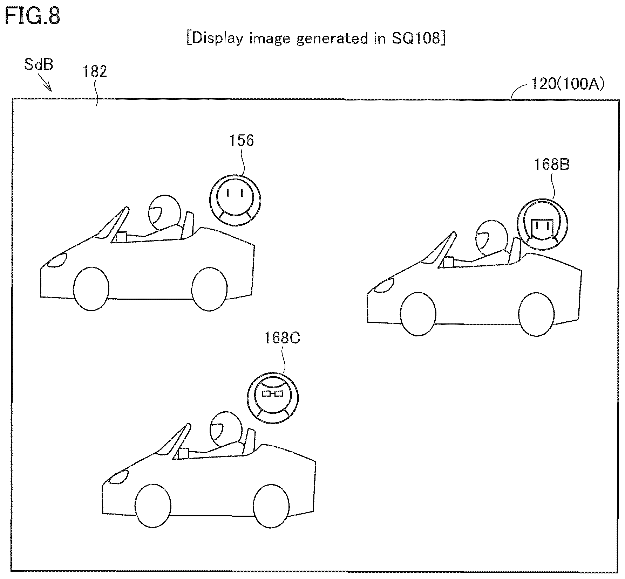

Also, the communication execution unit 140 may transmit an execution state, etc. of the game application 180 to the management server 200 and other information processing apparatuses 100 participating in the same group using the communication control unit 148. The execution state of the game application 180 may be transmitted at timing when a specified condition is satisfied, or may be transmitted periodically. The communication execution unit 140 may determine a layout of a screen displayed on the display 120. The layout of the screen displayed on the display 120 is, for example, information defining content of a display image Sd described later, arrangement and size of images included in the display image Sd, etc. The communication execution unit 140 transmits a request for changing the layout of the screen displayed on the display 120 to the image processing unit 150 based on, for example, a user operation. A user can change the layout by, for example, performing a setting operation during execution of the communication application. The request for changing the layout may be, for example, a request for causing the layout to be a standard layout as shown in FIG. 6 or a full-screen layout described later in which the game image 182 as shown in FIG. 8 is displayed on the entire display 120 in a full-screen manner.

Furthermore, the communication execution unit 140 may transmit the camera image 156 generated by the camera control unit 146 to other information processing apparatuses 100 using the communication control unit 148. The communication execution unit 140 may store the camera image 156 in the storage area 160 of the image processing unit 150. The communication execution unit 140 may store one or a plurality of camera images received from other information processing apparatuses 100 by the communication control unit 148 in the storage area 160 of the image processing unit 150. Hereinafter, one or a plurality of camera images received from other information processing apparatuses 100 are also referred to as "received camera images 168." The communication execution unit 140 may transmit a delivery image 164 generated by any method to other information processing apparatuses 100 using the communication control unit 148. The communication execution unit 140 may store one or a plurality of delivery images received from other information processing apparatuses 100 by the communication control unit 148 in the storage area 160 of the image processing unit 150. Hereinafter, one or a plurality of delivery images received from other information processing apparatuses 100 are also referred to as "received delivery images 166."

Also, the communication execution unit 140 may transmit the voice 154 generated by the microphone control unit 144 to other information processing apparatuses 100 using the communication control unit 148. The communication execution unit 140 may output one or a plurality of voices received from other information processing apparatuses 100 by the communication control unit 148 to the voice processing unit 152. Hereinafter, one or a plurality of voices received from other information processing apparatuses 100 are referred to as "received voice 158."

In this way, the communication control unit 148 performs data communication with other information processing apparatuses 100 corresponding to other accounts participating in the same group in the communication execution unit 140 and the management server 200, and acquires information from other information processing apparatuses 100 corresponding to other accounts participating in the same group by data communication.

The delivery image 164 may be generated based on one or a plurality of images usable in the information processing apparatus 100. For example, if the game application 180 is being executed in the information processing apparatus 100, the delivery image 164 may be generated based on the game image 182 output by the game application 180 being executed. If a menu screen is being displayed in the information processing apparatus 100, the delivery image 164 may be generated based on the menu screen. In other cases, for example, an image that substantially does not include video information such as a black image or a white image may be used as the delivery image 164. The received delivery image 166 is also similar to the delivery image 164.

The image processing unit 150 generates a video signal based on an image, and outputs the generated video signal to the display 120. For example, the display image Sd is used for generating a video signal. The image processing unit 150 may generate the display image Sd used for generating a video signal based on one or a plurality of images stored in the storage area 160 and the request regarding the layout from the communication execution unit 140. For example, the display image Sd may be generated by using the camera image 156 or the received camera image 168 so as to be superimposed on the game image 182. By generating the display image Sd, a face, etc. of a user playing the game application 180 may also be displayed on the display 120 together with the game image 182 output by the game execution unit 186.

The voice processing unit 152 generates a voice signal based on voice, and outputs the generated voice signal to the speaker 118. For example, the voice processing unit 152 may generate a voice signal by synthesizing game voice 184 output by the game execution unit 186 and one or a plurality of received voices 158. In addition, in the software configuration example shown in FIG. 4, at least a part of the communication application 114 may be an application outside the system module 132, similarly to the game application 180. At least a part of the game application 180 may be included in the system module 132. At least a part of game execution by the game application 180 may use the system module 132 of other information processing apparatuses 100, or may use external resources such as a server.

### [D. Processing Example in Communication Execution Unit 140]

Next, a processing example in the communication execution unit 140 will be described.

### (d1: Management of group information)

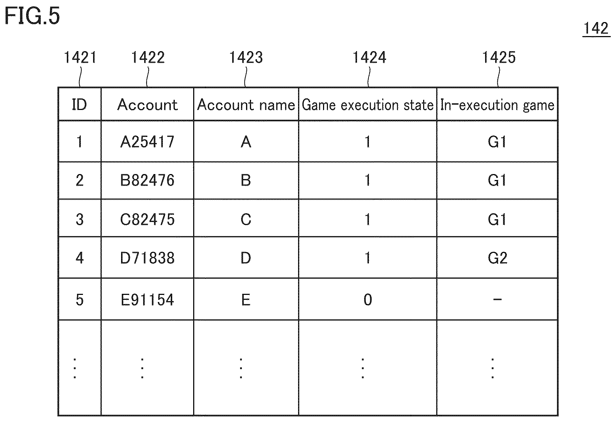

FIG. 5 is a schematic diagram showing an example of the group information 142 of the information processing apparatus 100 according to the present embodiment. Referring to FIG. 5, the group information 142 includes information regarding each account participating in the same group. The group information 142 may include information regarding the game application 180 in other information processing apparatuses 100. Also, the group information 142 may include information regarding other information processing apparatuses 100. The group information 142 may be generated and/or updated by the communication execution unit 140 based on information acquired from the management server 200. The communication execution unit 140 may generate the group information 142 according to participation of an account corresponding to its own apparatus (also referred to as "own account") in a group designated based on a user operation. The communication execution unit 140 transmits information of the own account to the management server 200, and other information processing apparatuses 100 also generate and/or update the group information 142 based on the transmitted information.

The group information 142 includes, as an example, an ID 1421, an account 1422, and an account name 1423. The ID 1421 indicates identification information for uniquely identifying each account within a group. The account 1422 indicates identification information for identifying each account. The account name 1423 indicates a name given to each account. The group information 142 may include a game execution state 1424 and in-execution game information 1425 as an example of information regarding the game application 180 in other information processing apparatuses 100.

The game execution state 1424 indicates an execution state of the game application 180 in the information processing apparatus 100 corresponding to each account. For example, "1" may mean being executed, and "0" may mean not being executed. The game execution state 1424 may be information indicating whether some game application 180 is being executed in each information processing apparatus 100. In addition, the information processing apparatus 100 may be able to execute the game application 180 in the background while executing, for example, a home menu application in the foreground. The game execution state of the game application 180 being executed in the background may be, for example, "1," may be "0," or may be another value.

The in-execution game information 1425 is information for identifying the game application 180 being executed in the information processing apparatus 100 corresponding to each account. The group information 142 may include information of the own account (account corresponding to its own apparatus), or may not include it. The group information 142 may not include at least a part of the information shown in FIG. 5, or may include other information. For convenience of description, the group information 142 is illustrated in a table format in FIG. 5, but a format for storing information may be any format. The information processing apparatus 100 does not need to always store the group information 142, and may inquire the management server 200, etc. each time. In this case, the information processing apparatus 100 may temporarily store or cache at least a part of information acquired from the management server 200.

The communication execution unit 140 transmits a camera image captured by the camera 124 and voice collected by the microphone 122 to other information processing apparatuses 100 as the communication data 10. Also, the communication execution unit 140 determines a data type in the communication data 10 received from other information processing apparatuses 100, and stores data for each data type together with source account information of the received communication data 10.

### (d2: Interface processing example)

As described above, the communication application 114 and the game application 180 can be executed simultaneously. In the present embodiment, an interface for exchanging information between the communication execution unit 140 and the game execution unit 186 is provided. More specifically, the communication execution unit 140 can respond with information based on the communication data 10 according to requests from various applications including the game application 180.

The communication execution unit 140 may provide an API (Application Programming Interface) for exchanging data with applications. In this case, an application such as the game application 180 requests the communication execution unit 140 to execute processing according to a command system defined in advance as an API. In this way, information based on information exchanged with other information processing apparatuses 100 is provided to the game execution unit 186 according to a request by the game execution unit 186 to the communication execution unit 140 via the API. Information acquired by the game execution unit 186 may be information itself acquired from other information processing apparatuses 100, or may be information on which some processing or process has been performed.

The processing according to the request includes, for example, processing of responding with information regarding an image stored in the storage area 160 of the image processing unit 150 and processing of changing the layout of the screen displayed on the display 120. Furthermore, the processing according to the request may include processing of responding with at least a part of the group information 142, processing of responding with information based on at least a part of the group information 142, processing of responding with the received voice 158, processing of responding with information regarding the received voice 158, etc.

### [E. Processing Example]

Next, examples of several processes executed according to a request from the game application 180 will be described. In the following, as an example, an example in which the same game application 180 is simultaneously executed in information processing apparatuses 100A to 100C in a state where respective users of the information processing apparatuses 100A to 100D have already participated in the same group based on their own accounts will be described. The information processing apparatus 100D is executing a game application different from those of other information processing apparatuses 100. The game application 180 described below is capable of executing a communication game.

FIG. 6 is an example of a display image Sd displayed on the display 120 of the information processing apparatus 100A. In the state shown in FIG. 6, the information processing apparatus 100A is executing the communication application 114 and is also executing the game application 180. The display image Sd includes a game image 182, a delivery image 164, a received delivery image 166B, a received delivery image 166C, and a received delivery image 166D. Hereinafter, the layout of the display within the display 120 shown in FIG. 6 is referred to as "standard layout."

The game image 182 is an image of the game application 180 being executed in the information processing apparatus 100A. The delivery image 164 is an image delivered by the information processing apparatus 100A toward other users participating in the communication group. The received delivery images 166B, 166C, 166D are images delivered by respectively different other users participating in the communication group, received by the information processing apparatus 100 of a user participating in the communication group. The received delivery images 166B to 166D are delivered by the information processing apparatuses 100B to 100D, respectively.

The delivery image 164 and the received delivery images 166B, 166C, 166D include the camera image 156 and received camera images 168B, 168C, 168D, respectively. Also, hereinafter, either or both of the camera image 156 and the received camera image 168 may be referred to as "camera image." The state shown in FIG. 6 is a state of waiting for start of a communication game by users of the information processing apparatuses 100A to 100C, as shown in the delivery image 164 and the received delivery images 166B, 166C. In this communication game, the game progresses by the information processing apparatuses 100 respectively corresponding to accounts participating in the same group communicating with each other. That is, a communication game is played between users participating in the same game group and the same communication group. The state of waiting for start of a communication game is, for example, a state of waiting for an account scheduled to participate in a communication game to participate in a game group, or a state of waiting for acquiring data necessary for executing a communication game from other information processing apparatuses 100.

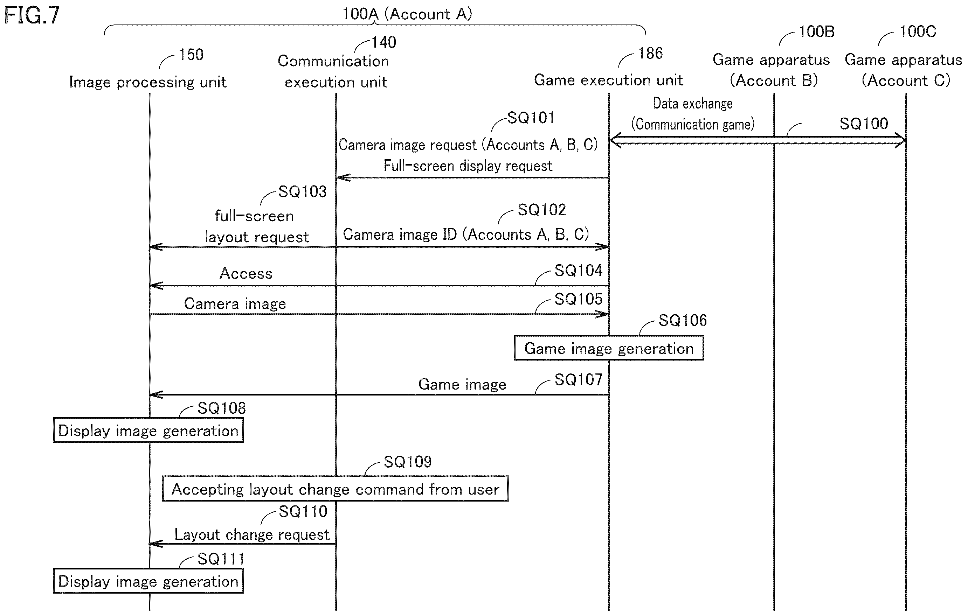

FIG. 7 is a first sequence diagram showing a processing example of the game application 180 according to the present embodiment. FIG. 7 shows a sequence in a case where a communication game starts from the state shown in FIG. 6. In the present embodiment, the game execution unit 186 identifies accounts of users participating in a communication game, and identifies one or a plurality of accounts participating in the same group by referring to the group information 142 acquired from the communication execution unit 140. A communication game by the game execution unit 186 is started, for example, by all of identified one or a plurality of accounts participating in the same group having participated in the game group. Also, start of a communication game may be performed based on passage of a specified time after a state of waiting for communication start is started, or may be performed based on an operation input by a specified user in the state of waiting for communication start. Also, it may be performed based on the number of accounts to participate reaching a prescribed participation number. Also, a plurality of these conditions may be combined. In the example shown in FIG. 7, the information processing apparatuses 100A to 100C executing a communication game exchange data necessary for execution of the game application 180 (sequence SQ100).

In the present embodiment, in executing a communication game, camera images of each user participating in the communication game are acquired by the game execution unit 186. The game execution unit 186 can further improve entertainment by, for example, including acquired camera images in the game image 182. In order to acquire camera images, the game execution unit 186 requests camera images from the communication execution unit 140 via the API based on accounts of other users participating in the identified same group. The game execution unit 186 requests, for example, camera images of accounts A, B, and C participating in the communication game. Also, in the present embodiment, the game execution unit 186 requests the communication execution unit 140 to display the game image 182 on the full-screen (sequence SQ101). Hereinafter, the request for camera images in sequence SQ101 is simply referred to as "camera image request," and the request for displaying the game image 182 on the full-screen in sequence SQ101 is simply referred to as "full-screen display request." The request in sequence SQ101 can be realized using the API described above.

The communication execution unit 140 refers to the group information 142 and responds to the game execution unit 186 with values of camera image IDs corresponding to accounts of selected users (sequence SQ102). Furthermore, the communication execution unit 140 requests the image processing unit 150 to change to a layout for displaying the game image 182 on the full-screen of the display 120 based on the full-screen display request from the game execution unit 186 (sequence SQ103). In addition, an object to which the game execution unit 186 performs the camera image request and the full-screen display request is not limited to the communication execution unit 140, and for example, the camera image request and the full-screen display request may be performed to the image processing unit 150. In this way, by causing the layout of the screen displayed on the display 120 to be changed without performing a setting operation based on a request from the game execution unit 186, a screen layout along the game can be realized while reducing a burden on a user.

The game execution unit 186 that has acquired camera image IDs in sequence SQ102 accesses the image processing unit 150 (sequence SQ104), and acquires camera images associated with values of the acquired camera image IDs (sequence SQ105). The game execution unit 186 performs image generation processing such as superimposing the acquired camera images on an image of a game being executed (sequence SQ106). In the present embodiment, the game image 182 is output using the camera image 156 and received camera images 168B, 168C.

The game execution unit 186 transmits the generated game image 182 to the image processing unit 150 (sequence SQ107). Thereby, the generated game image 182 is written into the storage area 160 of the image processing unit 150. The image processing unit 150 generates a display image Sd to be displayed on the display 120 based on the game image 182 generated by the game execution unit 186 and the request regarding the layout from the communication execution unit 140 (sequence SQ108). Processes of sequences SQ104 to SQ108 may be repeated until a specified operation for stopping display of camera images is performed or until the communication game ends. Also, only a part of the processes of sequences SQ104 to SQ108 may be repeated. For example, in a case of generating the game image 182 using camera images in a specified period including also static images, sequence SQ104 and sequence SQ105 are executed only once, and after outputting the game image 182 using acquired camera images, sequence SQ107 and sequence SQ108 may be repeated.

FIG. 8 is a schematic diagram showing an example of a display image Sd generated in sequence SQ108. FIG. 8 shows an example where the display image Sd is a game image 182 output using the camera image 156 and received camera images 168B, 168C in which each user is captured, in a case where three users are playing simultaneously. Hereinafter, the layout of the display within the display 120 shown in FIG. 8 is referred to as "full-screen layout."

Returning to FIG. 7, the communication execution unit 140 may accept a command to change the layout from a user. When accepting a command to change the layout from a user (sequence SQ109), the communication execution unit 140 transmits a request for changing the layout to the image processing unit 150 (sequence SQ110). For example, the communication execution unit 140 accepts a command to change from "full-screen layout" to "standard layout" from a user. The image processing unit 150 generates a display image Sd based on the game image 182 generated by the game execution unit 186 and a request for changing to "standard layout" from the communication execution unit 140 (sequence SQ111).

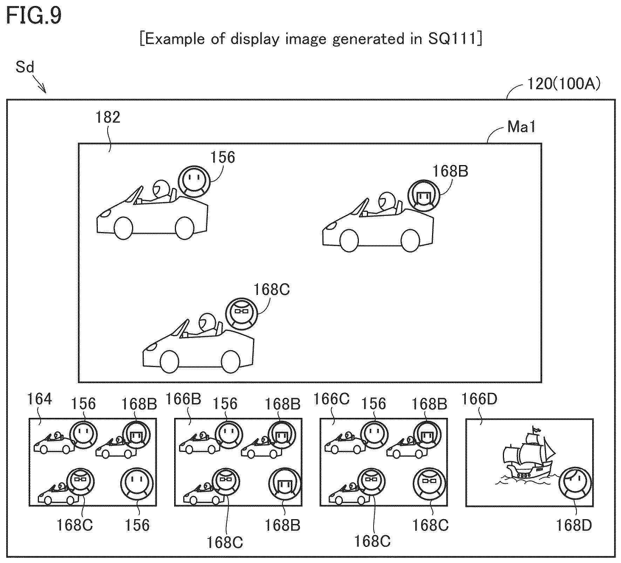

FIG. 9 is a schematic diagram showing an example of a display image Sd generated in sequence SQ111. FIG. 9 shows an example of the game image 182 in a case where three users are playing simultaneously. The display image Sd in FIG. 9 includes a game image 182, a delivery image 164, and received delivery images 166B, 166C, 166D.

As described above, the game image 182 is output using the camera image 156 and received camera images 168B, 168C. Also, the communication game in the example of FIG. 9 displays images common to each user performing the communication game. That is, game images 182 included in delivery images 164 delivered to the communication group by each of the information processing apparatuses 100A to 100C are common images. Therefore, as shown in the example of FIG. 9, the game images 182 shown by the delivery image 164 and received delivery images 166B, 166C are common images. In addition, game images 182 shown by the delivery image 164 and received delivery images 166B, 166C are not limited to common images, and may be images different from each other. For example, the game image 182 may be an image captured by virtual cameras arranged at different positions associated with virtual characters operated by each user in a virtual space. In the example of FIG. 9, the display image Sd includes five of each of the camera image 156 and received camera images 168B, 168C, and there is a possibility that user experience is degraded.

In the present embodiment, in a case where a communication game starts, a request for changing to the full-screen layout is performed based on camera images being acquired by the game execution unit 186. Thereby, degradation of user experience due to a plurality of the same camera images being displayed on the display 120 can be suppressed. In addition, in a period in which camera images are being acquired by the game execution unit 186, the communication execution unit 140 may restrict change to the standard layout as shown in sequences SQ109, SQ110.

In addition, in the example of FIG. 9, the game execution unit 186 performs the full-screen display request at a timing when the camera image request of sequence SQ101 is performed, regardless of whether the game execution unit 186 is generating the game image 182 using camera images acquired in sequence SQ105. Since content of the game image 182 changes according to game progress, the game image 182 is not always output using the camera image 156 and received camera images 168B, 168C. For example, according to game progress, the game image 182 may be output without using the received camera image 168C. For example, in a screen during transition, the game image 182 may be output without using camera images.

The game execution unit 186 may determine whether any of the camera image 156 and received camera images 168B, 168C is used for the game image 182 to be output, for each specified period such as a frame unit. In this case, for example, the game execution unit 186 may perform the full-screen display request if the game image 182 is output using camera images, and may perform a request for starting the standard layout if the game image 182 is not output using camera images. In this case, the layout is changed as appropriate according to progress of the game based on whether camera images are used for generation of the game image 182. Also, both determination of whether camera images are included in the game image 182 and a request for switching the layout when camera images are included are not limited to the game execution unit 186, and for example, may be performed by the communication execution unit 140. For example, the game execution unit 186 may determine whether the game image 182 is being output using camera images for each specified period, and the communication execution unit 140 may perform a layout change request to the image processing unit 150 based on that determination. In the present embodiment, the full-screen display request is performed only at the timing when the camera image request is performed. Thereby, it is possible to suppress frequent occurrence of automatic switching between the full-screen layout and the standard layout during game execution.

Returning to FIG. 7, similarly to sequence SQ109, the communication execution unit 140 may accept a command to display a superimposed image Mn, which is different from the command to change the layout, based on a command from a user, and perform a request for generating a display image based on the command to the image processing unit 150. The image processing unit 150 generates a display image Sd based on the game image 182 accepted from the game execution unit 186 in sequence SQ107 and a request for displaying a superimposed screen from the communication execution unit 140 (sequence SQ111).

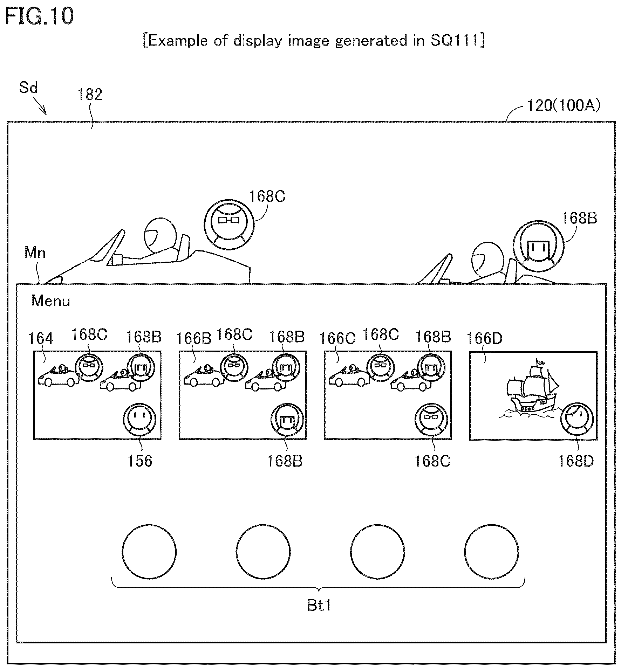

FIG. 10 is a schematic diagram showing an example of a generated display image Sd. The display image Sd shows a superimposed image Mn superimposed on the game image 182. The superimposed image Mn is, for example, a menu image including a delivery image 164, received delivery images 166B, 166C, 166D, and various buttons Bt1. Various buttons Bt1 include, for example, a button for temporarily stopping transmission of camera images and voice to other information processing apparatuses 100 by the information processing apparatus 100. Also, the superimposed image Mn is not limited to a menu image, and included elements are also not limited to the above. For example, the superimposed image Mn may be a screen including only the camera image 156. For example, the superimposed image Mn may be a screen including only received camera images 168.

In the example of FIG. 10, the camera image 156 is not used for output of the game image 182. That is, the example of FIG. 10 shows a situation where the camera image 156 has become not used for output of the game image 182 according to progress of the communication game as described above. Therefore, only received camera images 168B, 168C are shown in the game image 182.

A user of the information processing apparatus 100A might not be able to determine at a glance whether he/she is in a delivery state just by looking only at the game image 182 displayed in a state of the full-screen layout. A user of the information processing apparatus 100A can cause a superimposed image Mn to be displayed based on a specified operation by a user, as shown in FIG. 10. A camera image 156 showing himself/herself is displayed in the superimposed image Mn, and thereby he/she can confirm that he/she is in a delivery state. Also, it is similar for other users, not limited to himself/herself. This superimposed image Mn may be displayable only when it is the full-screen layout, or may be displayable even if it is another layout.

In addition, in the above example, an example was described where the superimposed image Mn is displayed based on a specified operation by a user. However, a trigger for displaying the superimposed image Mn is not limited to a specified operation by a user, and for example, it may be that a specified period has passed after operations from a user are no longer accepted, or it may be a request, etc. from the game execution unit 186 according to game progress. Also, when the superimposed image Mn becomes no longer displayed, it may be based on any of the above conditions. Also, the superimposed image Mn may superimpose the entire display area of the display 120. Also, in another example, a display mode of the game image 182 may be changed so as to fit in a display area on the display 120 that is not superimposed by the superimposed image Mn, for example, according to display of the superimposed image Mn.

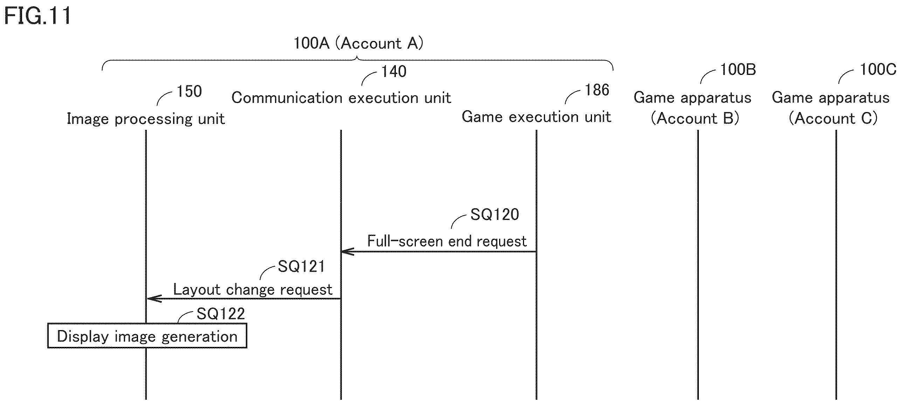

Next, an example of ending the full-screen layout will be described. FIG. 11 is a second sequence diagram showing a processing example of the game application 180 according to the present embodiment. FIG. 11 shows an example where a request for ending the full-screen layout is performed from the game application 180 from the state shown in FIG. 8. The game execution unit 186 performs a request for ending the full-screen layout based on, for example, end of the communication game or end of the game application 180 itself (sequence SQ120).

Based on the request for ending the full-screen layout, the communication execution unit 140 transmits a request for changing the layout to the image processing unit 150 (sequence SQ121). For example, if the communication game ends, the communication execution unit 140 performs a request for changing from "full-screen layout" to "standard layout." The image processing unit 150 generates a display image Sd based on the game image 182 generated by the game execution unit 186 and the request for changing to "standard layout" from the communication execution unit 140 (sequence SQ122). Also, for example, based on end of the game application 180 itself, a request for ending the full-screen layout may be transmitted from the communication execution unit 140 to the image processing unit 150 without via a request from the game execution unit 186.

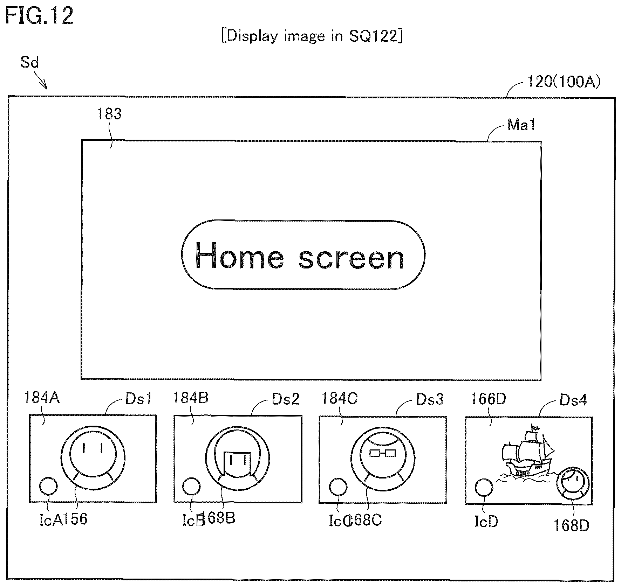

FIG. 12 is a schematic diagram showing an example of a display image Sd generated in sequence SQ122. In this example, as shown in FIG. 12, since the game applications 180 that were being executed in the information processing apparatuses 100A to 100C have ended respectively, the display image Sd includes a home screen 183 and delivery images 184A to 184C not including a game application image. The home screen 183 may be, for example, a screen for selecting a game application 180 to be executed, or may be a screen for changing settings of the information processing apparatus 100. The delivery images 184A to 184C may include the camera image 156 and received camera images 168B, 168C, respectively, or home screens of each of the information processing apparatuses 100A to 100C may be displayed. In addition, when only the communication game ends without the game application 180 itself ending, the delivery images 184A to 184C shown in FIG. 12 may be images in which each executes the game application 180 as shown in FIG. 6. Also, comparing FIG. 6 and FIG. 12, arrangement and size of the game image 182 and the delivery images are the same, and a display image is generated by the image processing unit 150 based on the same layout. Thereby, even in a case where a display image Sd is automatically displayed based on a full-screen end request, user confusion can be prevented by generating a display image based on a layout that was displayed in the past.

### [F. Modification Example]

In the above example, an example was described where a game application image is displayed on the full-screen on the display 120 based on an full-screen display request. However, in another example, for example, the communication execution unit 140 may request the image processing unit 150 to generate a display image Sd that does not include a received camera image 168 acquired by the game application 180 or a received delivery image 166 including a received camera image 168, according to a request from the game application 180. Thereby, also in the modification example, degradation of user experience due to a plurality of the same camera images being displayed on the display 120 can be suppressed.

Also, in the above example, an example was described where the camera image request and the full-screen display request are executed in SQ101 as the same sequence as separate requests. However, the camera image request and the full-screen display request may be performed based on the same request. Also, the requests may be executed as different sequences. Furthermore, all requests via API in the present specification, including the camera image request and the full-screen display request, may be requests via the same API, or at least one of them may be a request via a different API. In the present specification, regarding requests referred to as same, if a same purpose is achieved, such requests may be different requests via the same API or different requests via different APIs.

In the above example, it was described that switching between the full-screen layout and the standard layout can be performed based on a command from a user in the communication application or a request from the game application 180. However, switching between the full-screen layout and the standard layout may not be executed by a command from a user, and may be performed only based on a request from the game application 180.

When the layout of the screen is the full-screen layout, transmission of camera images may be stopped. For example, the camera 124 may stop imaging, or transmission of a captured image acquired from the camera 124 may be stopped. For example, when the layout of the screen is changed to the full-screen layout according to a request from the game application 180, the communication execution unit 140 may stop transmission of camera images. Alternatively, the game application 180 may perform a request for changing to the full-screen layout and also a request for stopping transmission of camera images to the communication execution unit 140. In addition, in a case where the communication execution unit 140 stops transmission of camera images in accordance with change to the full-screen layout, the game application 180 may perform a request for not stopping transmission of camera images together with a request for making it the full-screen layout to the communication execution unit 140. At this time, the communication execution unit 140 does not stop transmission of camera images while making it the full-screen layout.

Also, the image processing unit 150 may generate a display image Sd including a notification image which is an image indicating that switching of the layout is performed, based on a request related to switching of the layout from the game application 180. Generation of a display image Sd including a notification image by the image processing unit 150 may be performed based on a different request by the game application 180, that is, a request for generating a display image Sd including a notification image. Also, generation of a display image Sd including a notification image may be performed based on a request to the image processing unit 150 transmitted by the communication execution unit 140 based on the communication execution unit 140 having accepted a request related to switching of the layout from the game application 180. Also, a display image Sd including a notification image may be generated by the notification image being superimposed on a display image Sd either before or after the request related to switching. In a display image Sd including a notification image, the layout switches to a layout requested in the request related to switching of the layout from the game application 180 not including the notification image, based on a specified condition being satisfied. The specified condition is satisfied, for example, based on an operation of a user. Also, it may be satisfied based on a specified time having passed after the notification image is displayed. Also, the notification image is not limited to an image indicating that switching of the layout is performed, and for example, in addition to or instead of indicating that switching of the layout is performed, it may indicate an imaging state of the camera 124 in the display image Sd after being switched based on the request.

In the above example, an example was described where display in the display 120 is changed to "full-screen layout" by the communication execution unit 140 based on "full-screen display request" from the game application 180, but for example, instead of or in addition to these, it may be changed to a large-screen layout including a game image 182 having a size larger than the game image 182 in the standard layout based on a request from the game application 180. The size of the game image 182 in the large-screen layout is larger than the game image 182 in the standard layout. "Size is large" may be that a pixel size of an image is large, or may be that a display area on the display 120 is large.

In addition, the display image Sd in the standard layout as in FIG. 6 may include a session image that is an image indicating information regarding a session established in a group and is different from the camera image 156, the received camera image 168, etc. On the other hand, the display image Sd in the full-screen layout as in FIG. 8 may not include the session image. The session image may be, for example, information associated with an information processing apparatus 100 that is not delivering in a session. For example, it may be information regarding an account that is participating in the communication group and is associated with an information processing apparatus 100 other than the information processing apparatuses 100A to 100D. Specifically, it may be an icon or a name of an account.

In addition, the sequence diagrams and flowcharts described above may include other processes than the processes shown, or may not include some processes. Also, the order of each process is an example, and for example, each process may be executed simultaneously, or may be executed in a reverse order. Also, each process is described separately for convenience, but such process may be integrated processes. Also, each process may be executed at, for example, specified intervals (for example, every processing frame, every 1/30 second). Also, in the above, even in a case where data is described using the same term, each data does not need to match completely. At least, in a case where some information is substantially transmitted by a certain data and another data, such information may be considered to be the same data. Names of data do not limit a range indicated by data.

For example, a delivery image is not limited to data used only for delivery, and may be used for other purposes. It is similar for names of other elements. Also, "processor" may mean one or a plurality of processors within one apparatus such as a main body apparatus in the information processing apparatus 100, or may mean a part or all of one or a plurality of processors provided in each of a plurality of apparatuses such as a main body apparatus and a controller, or a main body apparatus, a controller, and a server, etc. The same applies to "memory."

Furthermore, a program for causing a computer to execute each process may be a single program, or may be a program group including a plurality of programs. "A certain program" does not need to mean one program, and can include a program group. Also, it is not necessary that all of programs are stored within one apparatus. "A certain program" may mean, for example, the whole of respective programs stored in a plurality of apparatuses included in an information processing system. At least a part of the series of processes described above may be executed by the management server 200 in an information processing system including the information processing apparatus 100 and the management server 200 capable of communicating via a network. In addition, the management server 200 may be configured by a plurality of information processing apparatuses, and the plurality of information processing apparatuses may share and execute the processes.

The embodiments disclosed this time should be considered as illustrative in all respects and not restrictive. The scope of the present invention is indicated not by the above description but by the claims, and it is intended that all changes within the meaning and scope equivalent to the claims are included.

## Claims

1. An information processing apparatus (100) configured to execute a chat application (114) that causes a display device (120) to display a first display image comprising a game application image output by a first game application (180) being executed and at least one distribution camera image distributed in a participating session, the information processing apparatus comprising:
one or more processors (102); and
one or more memories (108) storing instructions that, when executed by the one or more processors, cause the information processing apparatus to perform operations comprising:
during execution of the chat application, causing a first game application being executed to obtain the at least one distribution camera image based on a first request by the first game application; and
causing the display device to display a second display image comprising the game application image output by the first game application but not comprising the at least one distribution camera image.

2. The information processing apparatus (100) according to claim 1, wherein the game application image output by the first game application is output using the at least one distribution camera image obtained by the first game application.

3. The information processing apparatus (100) according to claim 1 or 2, wherein:
the first request comprises a second request and a third request;
the obtaining of the at least one distribution camera image is performed based on the second request; and
the displaying of the second display image is performed based on the third request while the first game application is caused to obtain the distribution camera image.

4. The information processing apparatus (100) according to claim 1 or 2,
wherein the game application image in the second display image is larger than the game application image in the first display image.

5. The information processing apparatus (100) according to claim 4, wherein the game application image in the second display image is displayed in full-screen on the display device.

6. The information processing apparatus (100) according to claim 1 or 2,
wherein the operations further comprise: causing the display device to temporarily display a third display image comprising the game application image and the at least one distribution camera image comprised in the first display image instead of the second display image, when a specified condition is satisfied during display of the second display image.

7. The information processing apparatus (100) according to claim 6, wherein the third display image is an image in which at least one of the distribution camera images comprised in the first display image is superimposed on the second display image.

8. The information processing apparatus (100) according to claim 1 or 2, wherein:
the first display image comprises a session image indicating information on the session and being different from the distribution camera image; and
the second display image does not comprise the session image.

9. The information processing apparatus (100) according to claim 8, wherein the session image indicates information associated with each of information processing apparatuses not distributing a distribution camera image in the session.

10. The information processing apparatus (100) according to claim 1 or 2,
wherein the operations further comprise: causing the display device to display the first display image instead of the second display image based on a fourth request from the first game application while the second display image is displayed.

11. The information processing apparatus (100) according to claim 1 or 2,
wherein the operations further comprise: causing the display device to display a fourth display image comprising the at least one distribution camera image instead of the second display image based on an end of the first game application while the second display image is displayed.

12. The information processing apparatus (100) according to claim 11,
wherein the fourth display image and the first display image comprise the distribution camera image at the same position in each display image.

13. A method used for an information processing apparatus (100) capable of executing a chat application that causes a display device to display a first display image comprising a game application image output by a first game application being executed and at least one distribution camera image distributed in a participating session, the method comprising:
during execution of the chat application, causing the first game application being executed to obtain the at least one distribution camera image based on a first request by the first game application; and
during execution of the chat application, causing the display device to display a second display image comprising the game application image output by the first game application but not comprising the at least one distribution camera image.

14. A program causing one or more processors to perform the method of claim 13.
